# EUROPÄISCHE PATENTANMELDUNG

(11) **EP 3 769 912 A1**
(43) Veröffentlichungstag der Anmeldung: **27.01.2021**
(21) Anmeldenummer: 19000343.4
(22) Anmeldetag: 23.07.2019
(51) Int. Cl.: B23Q 13/00, B23Q 11/08, B23Q 7/10, B23Q 3/157

(54) **WERKZEUGMASCHINEN-KOKON, WERKZEUGWECHSELVORRICHTUNG UND WERKZEUGMASCHINE**

(71) Anmelder: Erst-Maschinenbau GmbH, 73614 Schorndorf-Haubersbronn (DE)
(72) Erfinder: STIGLITZ, Jürgen, 73614 Schorndorf (DE)

(57) **Zusammenfassung**

Die Erfindung betrifft einen Werkzeugmaschinen-Kokon zur Aufnahme eines Werkstücks mit einem Bodenelement auf dem das Werkstück anordenbar ist, wobei der Werkzeugmaschinen-Kokon auf einer Werkzeugposition eines Werkzeugwechselsystems einbaubar ist. Die Erfindung betrifft ferner ein Werkzeugwechselsystem, eine Werkzeugmaschine und ein Verfahren zum Betreiben der Werkzeugmaschine.

## Beschreibung

### Technisches Gebiet

Die Erfindung betrifft einen Werkzeugmaschinen-Kokon für eine Werkzeugmaschine, ferner betrifft die Erfindung eine Werkzeugwechselvorrichtung, eine Werkzeugmaschine und ein Verfahren zum Betreiben einer Werkzeugmaschine.

### Stand der Technik

Werkzeugmaschinen sind Maschinen zur Fertigung von Werkstücken mit Werkzeugen. Hierbei wird die Bewegung zwischen Werkzeug und Werkstück während der Bearbeitung durch die Werkzeugmaschine vorgegeben. Das Material des Werkstückes wird hierbei häufig nacheinander mit mehreren Werkzeugen bearbeitet, um daraus ein Bauteil zu fertigen. Bearbeitungsprozesse in Werkzeugmaschinen sind typischerweise Fräsen, Drehen, aber auch Erodieren und Pressen können in Werkzeugmaschinen automatisiert durchgeführt werden. Das in die Werkzeugmaschine eingespannte Werkzeug ist deshalb vorzugsweise auswechselbar, wobei unterschiedliche Werkzeuge, wie beispielsweise Fräser, Bohrer, Wendeschneidplattenwerkzeuge in dem jeweilig eingesetzten Bearbeitungsprozess verwendet werden. Heutzutage werden im Zuge der automatisierten Werkzeugmaschinen, Werkzeug-Wechselvorrichtungen mit Werkzeugspeicher und/oder Werkzeugmagazine eingesetzt, bei denen die in den jeweiligen Bearbeitungsschritten verwendeten Werkzeuge automatisch ausgetauscht und gewechselt werden können. Hierbei wird ein Vorrat von unterschiedlichen Werkzeugen in einem mit der Werkzeugmaschine verbundenen Vorratsbereich, dem Werkzeugspeicher oder Werkzeugmagazin bereitgestellt und wird vor dem jeweiligen Bearbeitungsschritt automatisiert in die Bearbeitungseinheit der Werkzeugmaschine verbracht. Das Werkzeug wird typischerweise in einer Arbeitsspindel oder Hauptspindel gehaltert. Die Hauptspindel wird auch als Frässpindel bezeichnet, wenn das Werkzeug ein Fräser ist. Insbesondere ist die Hauptspindel die Werkzeugschnittstelle.

Die Steuerung der Werkzeugmaschine, die auch als Bearbeitungszentrum (BAZ) bezeichnet wird, einschließlich der Bearbeitungsschritte und der Werkzeugwechselvorrichtung erfolgt typischerweise mittels einer Ablaufsteuerung. Hierbei ist die Hauptaufgabe der Ablaufsteuerung während der Bearbeitung des Werkstückes die Bewegung des Werkzeuges entlang beliebig geformter Bahnen zu führen. Auch die Überwachung der Schnittkraft des Werkzeuges und der Werkzeugwechsel kann Teilaufgabe der Ablaufsteuerung sein.

Das zu bearbeitende Werkstück wird beispielsweise in einem Bereich unterhalb des Werkzeuges angeordnet. Hierbei sind Nullpunktspannsysteme verbreitet im Einsatz, um eine genaue reproduzierbare Positionierung eines Werkstückspannmittels des Werkstückes zu gewährleisten. Das Werkstück wird hierbei manuell in die Bearbeitungsposition angeordnet. Wenn die Bearbeitung des Werkstückes abgeschlossen ist, wird die Werkzeugmaschine angehalten und das bearbeitete Werkstück, meist das fertige Bauteil, wird ausgebaut und das neue zu bearbeitende Werkstück wird angeordnet.

Aus der DE 202006 015 240 U1 ist eine Werkzeug-Wechselvorrichtung für eine Werkzeugmaschine bekannt. Die Werkezug-Wechselvorrichtung beschreibt eine Vorrichtung, die einen automatisierten Wechsel von Werkzeugen einer Werkzeugmaschine ermöglicht.

### Darstellung der Erfindung. Aufgabe. Lösung. Vorteile

Es ist die Aufgabe der Erfindung, eine verbesserte Werkzeugwechselvorrichtung und eine verbesserte Werkzeugmaschine für den automatisierten Betrieb bereitzustellen. Ferner ist es die Aufgabe der Erfindung ein Verfahren zum Betreiben einer Werkzeugmaschine zu schaffen.

Die Aufgabe wird durch einen Werkzeugmaschinen-Kokon zur Aufnahme eines Werkstücks gelöst. Der Werkzeugmaschinen-Kokon weist ein Bodenelement auf, wobei der Werkzeugmaschinen-Kokon auf einer Werkzeugposition einer Werkzeugmaschine anordenbar ist.

Der Werkzeugmaschinen-Kokon wird typischerweise in einer Werkzeugmaschine mit einem Werkzeugwechselsystem eingesetzt. Insbesondere kann der Werkzeugmaschinen-Kokon in einem Werkzeugwechselsystem der Werkzeugmaschine eingesetzt werden.

Die Werkzeugmaschine kann im einfachsten Fall eine Werkzeugwechselvorrichtung oder ein Werkzeugwechselsystem und eine Bearbeitungseinheit zum Bearbeiten des Werkstückes aufweisen. Die Werkzeugwechselvorrichtung weist typischerweise einen Werkzeugspeicher mit Werkzeugpositionen zum Anordnen von Werkzeugen auf. Das zu bearbeitende Werkstück wird typischerweise im Werkzeugmaschinen-Kokon vor dem Einbau/Einsetzen in den Werkzeugspeicher oder das Werkzeugmagazin angeordnet.

Das Werkzeug wird im Betrieb der Werkzeugmaschine typischerweise aus dem Werkzeugspeicher in eine Arbeitsspindel oder Hauptspindel der Bearbeitungseinheit der Werkzeugmaschine verbracht. Dies kann erfolgen indem die Bearbeitungseinheit direkt von der Bearbeitungsposition in die Werkzeugposition des Werkzeugspeichers oder Werkzeugmagazins fährt, das Werkzeug mittels eines Spannzeuges aufnimmt und wieder zurück in die Bearbeitungsposition fährt. Alternativ kann das Werkzeugwechselsystem auch ein Transfersystem aufweisen, welches zum Verbringen des Werkzeuges aus der Werkzeugposition des Werkzeugspeichers in die Arbeitsspindel eingesetzt wird. Hierbei können während des automatisierten Betriebs der Werkzeugmaschine die Werkzeuge aus der jeweiligen Werkzeugposition des Werkzeugwechselsystems in die Arbeitsspindel, die der Werkzeugaufnahme dient, der Werkzeugmaschine verbracht werden. Die Spindel kann als Hauptspindel, Arbeitsspindel oder auch Werkzeugspindel bezeichnet werden.

Der Werkzeugspeicher des Werkzeugwechselsystems oder der Werkezugwechseleinrichtung weist typischerweise 20 oder mehr Positionen auf, die mit Werkzeugen bestückt werden können. Meist werden für einen automatisierten Bearbeitungsvorgang nicht alle Werkzeugpositionen benötigt, sodass freie Werkzeugpositionen zur Verfügung stehen. An eine oder mehrere der verfügbaren Werkzeugposition kann der Werkzeugmaschinen-Kokon angeordnet werden. Es können ein, zwei oder mehrere Werkzeugmaschinen-Kokons an freie Werkzeugpositionen angeordnet werden. Hierbei ist pro Werkzeugposition ein Werkzeugmaschinen-Kokon vorgesehen. Die Anzahl der verwendeten Werkzeugmaschinen-Kokons ist bevorzugt frei wählbar, je nachdem wie viele Werkstücke in einem automatisierten Maschinenlauf bearbeitet werden sollen.

Im Betrieb der Werkzeugmaschine kann der Werkzeugmaschinen-Kokon mit dem Werkstück von der Werkzeugposition des Werkzeugspeichers in ein Nullpunktspannsystem der Werkzeugmaschine verbracht werden. Bevorzugt ist das Nullpunktspannsystem ein Teilelement der Werkzeugmaschine, insbesondere der Bearbeitungseinheit der Werkzeugmaschine. Das Nullpunktspannsystem dient der Positionierung des Werkstückes in der Bearbeitungsposition. Der Werkzeugmaschinen-Kokon kann
hierbei mittels des gleich aufgebauten Spannzeugs, welches auch zur Transferierung der Werkzeuge verwendet wird, von der Werkzeugposition im Werkzeugspeicher an die Bearbeitungsposition verbracht werden.

Während des Ablaufes des Bearbeitungsprogramms der Werkzeugmaschine kann sowohl das Werkzeug aus dem Werkzeugspeicher in die Werkzeugspindel verbracht werden und damit ausgetauscht werden, als auch mit Hilfe des Werkzeugmaschinen-Kokons das Werkstücke ausgetauscht werden. Hierbei wird das zu bearbeitende Werkstück aus dem Werkzeugspeicher in die Bearbeitungsposition, beispielsweise in das Nullpunkspannsystem verbracht. Bearbeitete Werkstücke können aus der Bearbeitungsposition unter Verwendung des Werkzeugmaschinen-Kokons in den Werkzeugspeicher verbracht werden.

Hierbei ist vorteilhaft, dass durch den Einsatz des Werkzeugmaschinen-Kokons mehrere Werkstücke in einem Werkzeugmaschinenlauf bearbeitet werden können, ohne dass die Werkzeugmaschine zum Werkstückwechsel angehalten werden muss. Besonders vorteilhaft ist, dass kein Umbau der Werkzeugwechselvorrichtung erfolgen muss.

Bevorzugt sind mehrere Werkstücke mit mehreren Werkzeugen in einem Maschinendurchlauf bearbeitbar, ohne dass die Werkzeugmaschine angehalten werden muss. Bei Werkzeugmaschinen ohne Einsatz des Werkzeugmaschinen-Kokons kann in einem Maschinenlauf lediglich der Wechsel von Werkzeugen für unterschiedliche Bearbeitungsvorgänge an einem Werkstück erfolgen. Dann wird die Werkzeugmaschine üblicherweise angehalten und das zu bearbeitende Werkstück wird gewechselt. Danach wird die Werkzeugmaschine typischerweise wieder neu gestartet und durchläuft das Bearbeitungsprogramm erneut.

In einem automatisierten Bearbeitungsprozess der Werkzeugmaschine kann hierbei vorteilhafterweise sowohl ein automatisierter Werkzeugwechsel als auch ein automatisierter Werkstückwechsel durch den Einsatz des Werkzeugmaschinen-Kokons erfolgen. Hierbei ist vorteilhaft, dass insbesondere kein Umbau des Werkzeugwechselsystems notwendig ist, da der Werkzeugspeicher auch als Werkstückspeicher verwendet wird. Auch muss kein Anbau an das Werkzeugwechselsystem erfolgen, um zusätzliche Transfereinrichtung für einen Werkstückwechsel aus anderen Speicherpositionen als der Werkzeugspeicherposition während eines automatischen Bearbeitungsvorgangs der Werkzeugmaschine zu realisieren. Auch sind keine sonstigen Umbau- und/oder Anbaumaßnahmen notwendig.

Günstig ist es, das ein Deckelelement vorgesehen ist, welches mit dem Bodenelement verbindbar ist oder verbunden ist. Mit dem Deckelement kann ein abgeschlossener Innenraum im Werkzeugmaschinen-Kokon realisiert werden.

Durch den Werkzeugmaschinen-Kokon kann das Werkstück dann bevorzugt während des Transfervorgangs vom Werkzeugspeicher des Werkzeugwechselsystems aus der Werkzeugwechselposition in die Bearbeitungsposition geschützt werden. Der Werkzeugmaschinen-Kokon umhüllt das Werkstück vor der Bearbeitung durch das Werkzeug. Der Werkzeugmaschinen-Kokon kann deshalb auch als Werkstück-Hülle bezeichnet werden. Der Werkzeugmaschinen-Kokon ist bevorzugt eine Werkstück-Hülle. Ebenso kann der Werkzeugmaschinen-Kokon das bearbeitete Werkstück beim Rücktransport von der Bearbeitungsposition in die Werkzeugwechselposition umhüllen und somit schützen.

Es kann durch den Werkzeugmaschinen-Kokon ebenfalls verhindert werden, dass zu große Werkstücke verwendet werden und dadurch die Werkzeugmaschine, insbesondere während des Transfervorganges beschädigt wird. Der Werkzeugmaschinen-Kokon begrenzt bevorzugt durch seine Dimensionen die Größe des Werkstückes.

In einer Ausgestaltung des Werkzeugmaschinen-Kokons kann vorgesehen sein, zwischen dem Deckelelement und dem Bodenelement ein Mantelelement anzuordnen. Hierdurch kann ein dreiteiliger Werkzeugmaschinen-Kokon realisiert werden. Der Werkzeugmaschinen-Kokon kann so einfach zusammensetzbar und trennbar sein. Dadurch kann das Werkstück einfach innerhalb des Werkzeugmaschinen-Kokons angeordnet werden. Beispielsweise kann das Mantelelement eine zylinderförmige Hülle oder ein Rohr sein. Das Mantelelement ist bevorzugt zwischen dem Deckelelement und dem Bodenelement angeordnet. Das Deckelelement begrenzt den Werkzeugmaschinen-Kokon in Richtung der Spindel und/oder des Spannzeugs. Das Bodenelement begrenzt den Werkzeugmaschinen-Kokon in Richtung des Nullpunktspannsystems der Werkzeugmaschine, insbesondere des Bearbeitungsbereiches der Werkzeugmaschine. Das Bodenelement verbleibt bevorzugt während des Bearbeitungsvorgangs des Werkstückes im Nullpunktspannsystem. Typischerweise verbleibt das Werkstück während des Transportvorgangs und des Bearbeitungsprozesses auf dem Bodenelement. Das Deckelement und/oder das Mantelelement werden typischerweise nach der Positionierung des Werkstückes im Nullpunktspannsystem aus der Bearbeitungsposition entfernt. Bevorzugt wird das Deckelelement und/oder das Mantelelement an die Werkzeugposition verbracht.

Das Deckelelement und/oder das Mantelelement können mittels einer Verriegelungseinrichtung lösbar mit dem Bodenelement verbunden werden und/oder an diesem fixiert werden. Die Verbindung ist bevorzugt lösbar. Dadurch kann das Deckelelement und/oder das Mantelelement separat vom Bodenelement bewegt werden. Beispielsweise in die Werkzeugpositionen des Werkzeugwechselsystems verfahren werden.

Die Verriegelungseinrichtung ermöglicht die Entfernung des Mantelelementes und/oder des Deckenelementes nachdem der Werkzeugmaschinen-Kokon in der Bearbeitungsposition der Bearbeitungseinheit der Werkzeugmaschine angeordnet ist. Dadurch kann das Bodenelement im Bearbeitungsbereich, bevorzugt im Nullpunktspannsystem verbleiben und das Mantelelement und/oder das Deckelelement kann/können aus dem Bearbeitungsbereich entfernt werden.

Der Werkzeugmaschinen-Kokon kann so, nachdem das Werkstück in der Bearbeitungsposition angeordnet ist, wieder in den Werkzeugspeicher verbracht werden und dort als leerer Werkzeugmaschinen-Kokon positioniert werden. Typischerweise ist dies die vorherige Werkzeugwechselposition des Werkzeugmaschinen-Kokons mit dem Werkstück. Die Entfernung des Deckelementes und/oder des Mantelelementes kann direkt mittels der Werkzeugspindel erfolgen. Das Lösen der Verriegelung kann hierbei einfach, insbesondere durch eine Relativbewegung zwischen Bodenelement und Mantelelement erfolgen. Die Verriegelungseinrichtung ist somit mittels einer Relativbewegung zwischen Bodenelement und Mantelelement und/oder Deckenelement betätigbar. Die Relativbewegung kann beispielsweise eine Drehbewegung sein.

Alternativ kann auch ein Transfersystem des Werkzeugwechselsystems zum Transport des Werkzeuges und des Werkzeugmaschinen-Kokon verwendet werden, wobei das Werkzeug und der Werkzeugmaschinen-Kokon insbesondere in die Arbeitsspindel der Bearbeitungseinheit eingesetzt ist.

In einer bevorzugten Ausgestaltung sind das Mantelelement und/oder das Deckelelement und/oder das Bodenelement des Werkzeugmaschinen-Kokons rotationssymmetrisch ausgeführt. Das Mantelelement kann ein zylindrisches Mantelelement sein. Das Mantelelement kann auch kegelförmig sein. In einer weiteren Ausgestaltung kann das Mantelelement eine hyperbolische Gestalt ausweisen. Ferner kann das Mantelelement auch einen polygonalen Mantelkörper aufweisen.

Das Deckelelement kann in Form eines Kegels oder topfförmig aufgeführt sein.

Hierbei ist vorteilhaft, dass die Abmessungen der Werkzeugwechselpositionen optimal ausgenutzt werden können. Ferner kann das Bodenelement rotationssymmetrisch gestaltet sein. Das Bodenelement ist bevorzugt als rotationssymmetrische Scheibe mit endlicher Dicke ausgeführt. Dadurch kann das Bodenelement in das Mantelelement oder das Deckelelement hineinpassen. Bei der Montage des Bodenelementes kann das Mantelelement und/oder das Deckelelement beispielsweise über das Bodenelement geschoben werden. Durch eine Drehung kann mittels der Verriegelungseinrichtung eine Fixierung des Bodenelementes an dem Mantelelement und/oder dem Deckelelement erfolgen. Das Deckelelement ist bevorzugt ebenfalls rotationssymmetrisch ausgeführt. Das Deckelelement kann dadurch in das Mantelelement eingeschoben werden und mit diesem nicht lösbar oder lösbar verbunden werden. Das Deckelelement, das Mantelelement und das Bodenelement weisen hierbei bevorzugt dieselbe Rotationssymmetrie auf.

Bevorzugt weist das Deckelelement des Werkzeugmaschinen-Kokons eine Ausnehmung auf, die insbesondere der Aufnahme eines Spannzeuges dient. Mittels der Aufnahme kann ein Spannzeug an dem Werkzeugmaschinen-Kokon befestigt werden, bevorzugt lösbar befestigt werden. Die Aufnahme kann beispielsweise in Form eines Langloches realisiert sein und eine, bevorzugt mittig angeordneten Ausnehmung zur Aufnehmung des Spannzeugs, zumindest zur Aufnahme eines Teilelements des Spannzeugs, aufweisen. In die Aufnahme, insbesondere in das Langloch mit der Ausnehmung kann eine als Gegenstück ausgeführte Schnittstelle des Spannzeuges eingeführt werden, dieses kann gedreht und somit außerhalb der Ebene des Langlochs positioniert werden. Dadurch kann das Spannzeug lösbar an dem Deckelelement fixiert werden. Beim Lösen des Spannzeuges vom Deckelelement kann durch eine Drehung in Gegenrichtung die Fixierung gelöst werden und durch eine entsprechende vertikale Bewegung das Spannzeug aus dem Deckelelement bewegt und von diesem getrennt werden. Dadurch ist vorteilhafterweise eine einfache Schnittstelle zwischen Werkzeugmaschinen-Kokon und Spannzeug geschaffen. Hierbei ist das Spannzeug bevorzugt eine Standard-Werkzeugaufnahme, wie sie in Werkzeugwechselsystemen eingesetzt wird.

Alternativ kann auch ein modifizierte Werkzeugaufnahme oder ein modifiziertes Spannzeug verwendet werden, welches direkt lösbar oder nicht lösbar mit dem Deckelelement verbunden ist. Beispielsweise kann das Spannzeug mit dem Deckelelement verschweißt, vernietet oder verlötet oder auch verklebt sein.

In einer weiteren Ausgestaltung des Werkzeugmaschinen-Kokons ist an dem Mantelelement und/oder dem Deckelelement mindestens ein erstes Verriegelungselement der Verschlusseinrichtung angeordnet und am Bodenelement ist mindestens ein zweites Verriegelungselement angeordnet, wobei das erste Verriegelungselement und das zweite Verriegelungselement ineinander eingreifen, um das Mantelelement und/oder das Deckelelement mit dem Bodenelement zu verbinden.

Bevorzugt weisen das erste Verriegelungselement und das zweite Verriegelungselement jeweils Mittel auf, wodurch die Verbindung und das Lösen mittels einer relativen Bewegung, insbesondere einer Drehbewegung zwischen dem erstem Verriegelungselement und dem zweitem Verriegelungselement herstellbar ist. Hierbei ist eine Wirkverbindung zwischen dem ersten Verriegelungselement und dem zweiten Verriegelungselement bevorzugt durch eine Drehbewegung realisierbar. Dabei ist von Vorteil, dass die Drehung eine einfache Bewegung ist, die in der Werkzeugmaschine realisiert ist. Die Drehbewegung ist bevorzugt der Rotationssymmetrie des Mantelelementes und/oder des Deckelelementes angepasst. Hierbei kann die Wirkverbindung mechanisch sein.

Alternativ kann die Wirkverbindung auch durch magnetische Verriegelungselemente realisiert sein. Dies kann beispielsweise ein Permanentmagnet als erstes Verriegelungselement und ein magnetischer oder magnetisierbarer Gegenpart als zweites Verriegelungselement sein.

In dem Werkzeugmaschinen-Kokon ist die Verriegelungseinrichtung als ein Bajonettverschlusssystem ausgestaltet. Hierbei weist das erste Verriegelungselement bevorzugt mindestens zwei Vorsprünge auf und das zweite Verriegelungselement mindestens zwei Ausnehmungen. Wobei die Vorsprünge und die Ausnehmungen ineinander greifen können und durch Verdrehen fixiert und gelöst werden können.

In einer bevorzugten Ausgestaltung des Werkzeugmaschinen-Kokon weist das Bodenelement mindestens eine Verdrehsicherungseinrichtung auf. Die Verdrehsicherungseinrichtung ist bevorzugt eine Rasteinrichtung. Bevorzugt weist die Verdrehsicherungseinrichtung, insbesondere die Rasteinrichtung eine Feder, bevorzugt eine Druckfeder, einen Spannbolzen und eine Druckplatte auf. Mittels der Verdrehsicherungseinrichtung, insbesondere der Rasteinrichtung kann das Bodenelement an dem Mantelelement und/oder dem Deckelelement sicher fixiert werden. Dies ist wichtig, um einen sicheren Transport des Werkzeug-Kokons während des Transfervorgangs von dem Werkzeugspeicher des Werkzeugwechselsystems in die Bearbeitungseinheit zu gewährleisten.

Bevorzugt ist der Werkzeugmaschinen-Kokon, insbesondere sind das Mantelelement und/oder das Deckelelement und/oder das Bodenelement aus einem Metall oder einer Metalllegierung gefertigt. Hierdurch ist eine ausreichende Festigkeit gewährleistet. Das Mantelelement kann hierbei aus einem massiven Metallkörper gefertigt sein, beispielsweise einem Metallzylinder. Alternativ kann der Mantelkörper auch Löcher aufweisen, also perforiert sein. Dies kann vorteilhaft sein, um Gewicht einzusparen. Das Mantelelement kann auch Streben aufweisen, die das Deckelelement und das Bodenelement beabstanden. Dadurch kann ein gewisser Schutz für innerhalb des Werkzeugmaschinen-Kokons angeordnete Werkstücke ausgebildet sein. Gewährleistet muss eine ausreichende Festigkeit des Werkzeugmaschinen-Kokons, insbesondere des Mantelelementes sein.

In einer alternativen Ausgestaltung können das Mantelelement und/oder das Bodenelement und/oder das Deckelelement aus Kunststoff gefertigt sein. Alternativ kann es auch vorgesehen sein, das Mantelelement und/oder das Bodenelement und/oder das Deckelelement aus Holz zu fertigen. Alternativ kann auch ein Kohlefasermaterial für das Mantelelement und/oder das Bodenelement und/oder das Deckelelement verwendet werden. Wichtig ist hierbei eine ausreichende Formstabilität des verwendeten Materials.

Günstig ist hierbei, dass der Werkzeugmaschinen-Kokon der Bevorratung von Werkstücken in dem Werkzeugspeicher der Werkzeugwechselvorrichtung der Werkzeugmaschine dient und einsetzbar ist. Hierdurch können bevorzugt zu bearbeitende Werkstücke an Werkezeugpositionen des Werkzeugspeichers gelagert werden und während eines Werkzeugmaschinenablaufes mit derselben Transfereinheit und der Werkzeugspindel, die auch die Werkzeuge in die Bearbeitungsposition verbringt, an die Bearbeitungsposition verbracht werden. Bevorzugt werden die Werkstücke hierbei in das Nullpunktspannsystem der Bearbeitungsposition verbracht. Mit der gleichen Transfereinheit können die bearbeiteten Werkstücke dann wieder mittels des Werkzeugmaschinen-Kokons aus der Bearbeitungsposition in die Werkzeugposition des Werkzeugspeichers verbracht werden. Hierbei ist der Werkzeugmaschinen-Kokon während des Transports und/oder Transfervorgangs geschlossen. An der Bearbeitungsposition wird der Werkzeugmaschinen-Kokon geöffnet. Die Verriegelungseinrichtung wird hierbei geöffnet. Das Werkstück wird bevorzugt mit dem Bodenelement des Werkzeugmaschinen-Kokons in der Bearbeitungsposition positioniert.

Die Aufgabe wird ferner durch ein Werkzeugwechselsystem mit einem Werkzeugspeicher und/oder Werkzeugmagazin gelöst. Das Werkzeugwechselsystem weist Werkzeugpositionen zur Positionierung von Werkzeugen und Werkstücken auf Insbesondere können Werkzeugmaschinen-Kokons in dem Werkzeugspeicher und/oder Werkzeugmagazin auf Werkzeugpositionen positioniert werden. Das Werkzeugwechselsystem kann auch ein Transfersystem aufweisen.

Die Aufgabe wird ferner durch eine Werkzeugmaschine mit einer Werkzeugwechselvorrichtung und mindestens einer Bearbeitungseinheit gelöst. Die Werkzeugmaschine kann auch eine Transfereinrichtung aufweisen. Die Werkzeugwechselvorrichtung weist einen Werkzeugspeicher mit Werkzeugpositionen auf, wobei in die Werkzeugpositionen Werkzeuge und Werkzeugmaschinen-Kokons anordenbar und positionierbar sind.

Die Werkzeugwechselvorrichtung und die Werkzeugmaschine weisen die bereits im Zusammenhang mit dem Werkzeugmaschinen-Kokon beschriebenen Vorteile und Merkmale auf. Insofern wird auf die Beschreibung des Werkzeugmaschinen-Kokons verwiesen.

In einer bevorzugten Ausgestaltung der Werkzeugmaschine werden die Werkzeuge und die Werkzeugmaschinen-Kokons in die Bearbeitungseinheit verbracht. Dies kann mittels der Spindel der Bearbeitungseinheit der Werkzeugmaschine erfolgen. Alternativ kann die Verbringung des Werkezeuges und/oder Werkzeugmaschinen-Kokons auch mittels der Transfereinrichtung und der Arbeitsspindel oder Werkzeugspindel der Werkzeugwechselvorrichtung und der Werkzeugspindel erfolgen.

Hierdurch kann der automatisierte Betrieb der Werkzeugmaschine ermöglicht sein, wobei mehrere Werkstücke nacheinander bearbeitbar sind, ohne dass die Werkzeugmaschine angehalten werden muss und ohne dass manuell Werkstücke gewechselt werden müssen. Bevorzugt können in einem Maschinendurchlauf die mehreren Werkstücke mit unterschiedlichen Werkzeugen bearbeitet werden.

Die Aufgabe wird ferner durch ein Verfahren zum automatischen Betreiben einer Werkzeugmaschine gelöst, wobei die Werkzeugmaschine eine Werkzeugwechselvorrichtung und eine Bearbeitungseinheit aufweist, wobei in der Werkzeugwechselvorrichtung sowohl Werkzeuge zum Einsetzen in die Bearbeitungseinheit als auch zu bearbeitenden Werkstücke angeordnet werden können, wobei die Werkstücke in einem Werkzeugmaschinen-Kokon zum Einsatz in der Werkzeugwechselvorrichtung angeordnet sind.

Bevorzugt können in dem Verfahren zum Betreiben der Werkzeugmaschine die Werkzeuge und die Werkzeugmaschinen-Kokons mittels einer Arbeitsspindel der Bearbeitungseinheit oder einer Transfereinheit der Werkzeugwechselvorrichtung von dem Werkzeugspeicher in die Bearbeitungseinheit transferiert werden. Ferner können bearbeitete Werkstücke unter Einsatz des Werkzeugmaschinen-Kokons aus der Bearbeitungsposition in den Werkzeugspeicher verbracht werden.

Vorteilhafte Ausgestaltungen der Werkzeugmaschinen-Wechselvorrichtung und des Verfahrens zum Betreiben einer Werkzeugmaschine sind den abhängigen Ansprüchen zu entnehmen.

### Kurze Beschreibung der Figuren der Zeichnung

Nachstehend wird die Erfindung auf der Grundlage zumindest eines Ausführungsbeispiels anhand der Figuren der Zeichnung näher erläutert. Es zeigen:
- Fig. 1 ein: Ausführungsbeispiel eines Werkzeugmaschinen-Kokons;
- Fig. 2a, 2b, 2c und 2d: der Werkzeugmaschinen-Kokon im entriegelten Zustand;
- Fig. 3a, 3b und 3c: der Werkzeugmaschinen-Kokon im verriegelten Zustand;
- Fig. 4a, 4b, 4c: Werkzeugmaschinen-Kokon mit beispielhaftem Spannwerkzeug im entriegelten Zustand;
- Fig. 5a, 5b, 5c: Werkzeugmaschinen-Kokon mit beispielhaftem Spannwerkzeug im verriegelten Zustand;
- Fig. 6: Werkzeugmaschine mit Werkzeugwechselsystem;
- Fig. 7: Verfahren zum Betreiben einer Werkzeugmaschine;

### Bevorzugte Ausführung der Erfindung

Nachfolgend wird der Gegenstand der Erfindung anhand der in den Figuren dargestellten Gegenstände näher beschrieben. Die nachfolgende Beschreibung bevorzugter Ausführungsformen dient im Zusammenhang mit der Zeichnung der näheren Erläuterung der Erfindung.

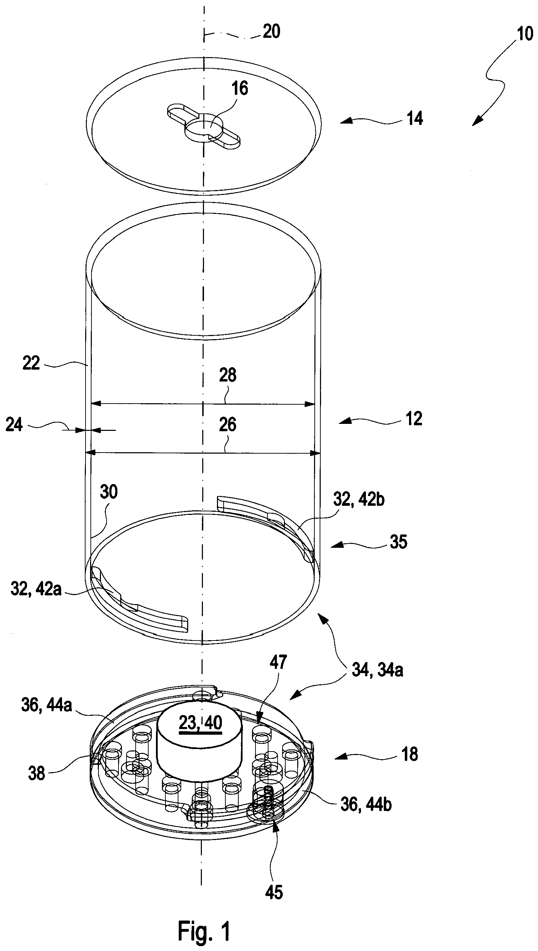

Figur 1 zeigt in schematischer transparenter Darstellung einen Werkzeugmaschinen-Kokon 10 mit einem Mantelelement 12, einem Deckelelement 14 und einem Bodenelement 18. Das Deckelement 14 weist eine Ausnehmung 16 auf.

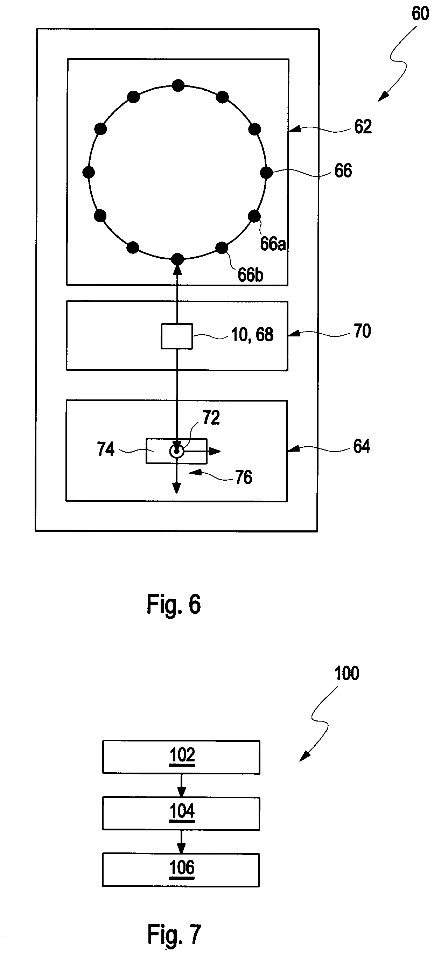

In der einfachsten Ausgestaltung der Erfindung weist der Werkzeugmaschinen-Kokon 10 nur das Bodenelement 18 zur Positionierung des Werkstückes 40 auf. Mittels des Werkzeugmaschinen-Kokons 10 können Werkstücke 40 so auf Werkzeugpositionen 66 einer in Figur 6 dargestellten Werkzeugwechselvorrichtung oder Werkzeugwechselsystems 62 mit Werkzeugspeicher positioniert und bevorratet werden.

Das Deckelelement 14 kann mit dem Mantelelement 12 verbunden werden und ist in zusammengebauten Zustand des Werkzeugmaschinen-Kokons 10 mit dem Mantelelement 12 verbunden. Die Verbindung kann lösbar ausgeführt sein, beispielsweise als Verschraubung. Die Verbindung kann auch nicht lösbar ausgeführt sein, wie beispielsweise bei einer Verschweißung, Verklebung oder einer Vernietung.

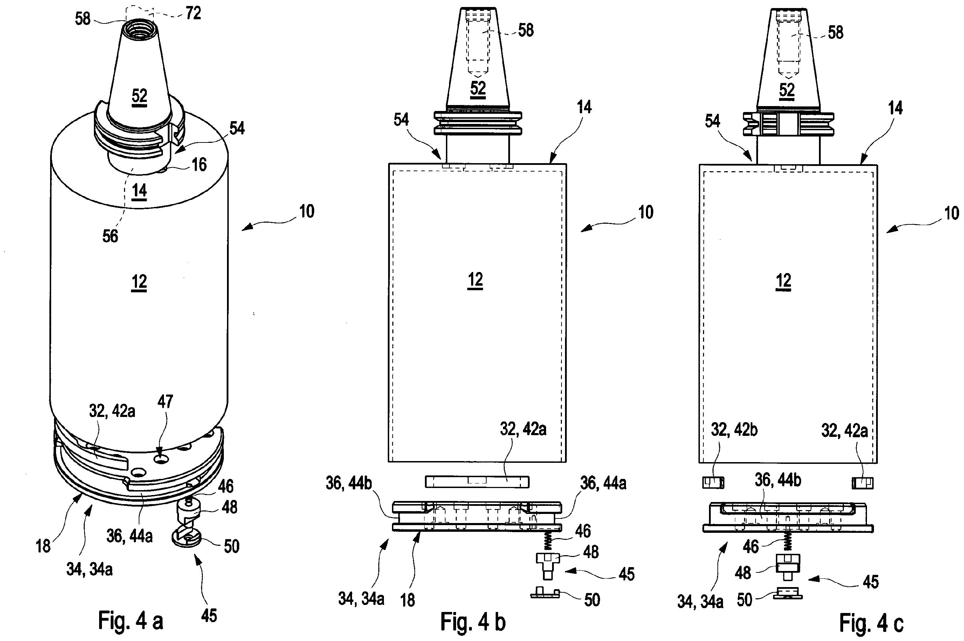

Die Ausnehmung 16 dient der Aufnahme und Fixierung eines nicht dargestellten Spannzeugs, wie es typischerweise in bekannten Werkzeugwechselsystemen eingesetzt wird. In Figuren 4a, 4b und 4c sind Spannzeuge 58 gezeigt. Mittels des Spannzeuges kann der Werkzeugmaschinen-Kokon 10 aus einer Werkzeugposition 66 in einem Werkzeugwechselsystem 62 oder einer Werkzeugwechselvorrichtung 62 an eine Position in einer Bearbeitungseinheit 64 der Werkzeugmaschine 60 verbracht werden. Dies ist im Zusammenhang mit Figur 6 beschrieben.

Alternativ kann am Deckelelement 14 ein Teil des Spannzeuges oder das Spannzeug lösbar oder nicht lösbar verbunden sein.

Das Mantelelement 12, das Deckelelement 14 und das Bodenelement 18 können aus unterschiedlichen Materialien gefertigt sein. Beispielsweise als Aluminium, aus Stahl, aus Kunststoff und/oder aus Holz. Es kann auch vorgesehen sein, Kohlefasermaterial für das Mantelelement 12, das Deckenelement 14 und/oder das Bodenelement 18 zu verwenden. Hierbei ist die Wahl des Materials dem jeweiligen Anwendungsfall und der jeweiligen Werkzeugmaschine angepasst. Wichtig hierbei ist eine ausreichende Festigkeit des Werkzeugmaschinen-Kokons 10.

Vorzugsweise ist das Deckelelement 14 innerhalb des Mantelelementes 12, insbesondere einem oberen Abschnitt des Mantelelementes 12 angeordnet. Das Mantelelement 12 weist einen zu einer Rotationsachse 20 rotationssymmetrisch ausgeführten Mantelkörper 22 mit einer Wandstärke 24 auf. Der Mantelkörper 22 kann aus Vollmaterial gefertigt sein oder auch aus Nichtvollmaterial, beispielsweise aus einem Lochblech. Hierbei ist die Stabilität des Mantelkörpers 22 so ausgelegt, dass das Deckelement 14 und das Bodenelement 18 in einem definierten Abstand gehalten werden können. Ferner ist der Mantelkörper 22 so ausgeführt, dass ein innerhalb des Werkezugmaschinen-Kokon 10 angeordneter Gegenstand 23 geschützt ist. Die Dimension des Mantelkörpers 22 begrenzt die Größe des Gegenstandes 23, insbesondere des Werkstückes 40. Das Mantelelement 12 weist einen Außendurchmesser 26 und einen Innendurchmesser 28 auf.

Der Mantelkörper 22 ist bevorzugt zylinderförmig ausgeführt. Er kann aber auch als ein beliebiger Rotationskörper ausgeführt sein, beispielsweise kegelförmig, als Rotationshyperboloid oder mit einer polygonalen Außenfläche.

In einer nicht dargestellten Ausführungsform kann das Deckelelement 14 einstückig mit dem Mantelelement 12 ausgebildet sein. Beispielsweise als "Hutförmiges" oder "Topfförmiges" Deckelelement 14. Das Deckelelement 14 kann dann direkt mit dem Bodenelement 18 lösbar verbunden werden.

An einer Innenwandung 30 des Mantelelementes 12 ist ein erstes Verriegelungselement 32 einer Verriegelungseinrichtung 34 angeordnet. Das Verriegelungselement 32 ist bevorzugt in einem unteren Abschnitt 35 des Mantelkörpers 22, in den das Bodenelement 18 im zusammengebauten Zustand positioniert wird, angeordnet. Das Bodenelement 18 wird im Betrieb im unteren Abschnitt 35 positioniert und lösbar mit dem Mantelelement 12 verbunden und mittels eines zweiten Verriegelungselementes 36 der Verriegelungseinrichtung 34 lösbar fixiert. Hierbei ist das zweite Verriegelungselement 36 an einer Außenwandung 38 des Bodenelementes 18 angeordnet.

Auf dem Bodenelement 18 ist ein zu bearbeitendes Werkstück 40 angeordnet. Zur Befestigung oder Fixierung des Werkstückes 40 sind nicht dargestellte Fixierelemente vorgesehen. Das Bodenelement 18 wird zur Bearbeitung in der Bearbeitungseinheit der Werkzeugmaschine in ein Nullpunktspannsystem 76 der Werkzeugmaschine positioniert werden.

Die Verriegelungseinrichtung 34 ist bevorzugt als ein Bajonettverschluss 34a ausgeführt. Der Bajonettverschluss ist 34a eine schnell herstell- und lösbare mechanische Verbindung zwischen dem Bodenelementes 18 und dem Mantelelements 12. Bevorzugt sind das Bodenelement 18 und das Mantelelement 12 zylindrisch ausgeführt. Das Bodenelement 18 und das Mantelelement 12 können durch Ineinanderstecken und relatives Drehen zueinander miteinander verbunden und so auch wieder getrennt werden. Hierbei greifen das erste Verriegelungselement 32 und das zweite Verriegelungselement 36 ineinander ein. Das erste Verriegelungselement 32 und das zweite Verriegelungselement 36 stehen in einer Wirkverbindung.

Die Verriegelungseinrichtung 34 kann auch als ein Druckstück oder als ein Greifersystem ausgeführt sein. Grundsätzlich ist als Verriegelungseinrichtung 34 jede Verriegelungsart geeignet, die wiederholt geöffnet und verschlossen werden kann. Das erste Verriegelungselement 32 ist als Vorsprung 42 ausgeführt, wobei in Figur 1 zwei Vorsprünge 42a und 42b gezeigt sind. Entsprechend ist das zweite Verriegelungselement 36 als Aussparung 44 gezeigt, wobei zwei Aussparungen 44a und 44b gezeigt sind. Die Verriegelungseinrichtung 34 kann in alternativen Ausgestaltungsformen auch mehr als zwei Verriegelungselemente aufweisen.

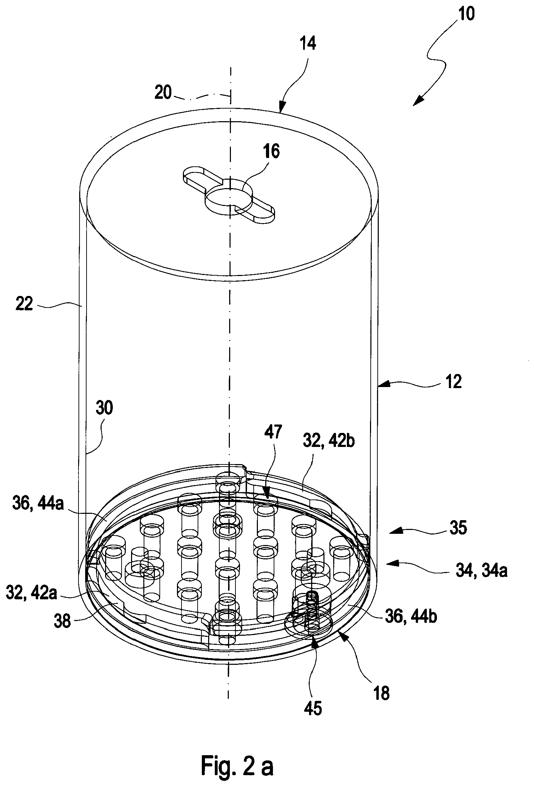

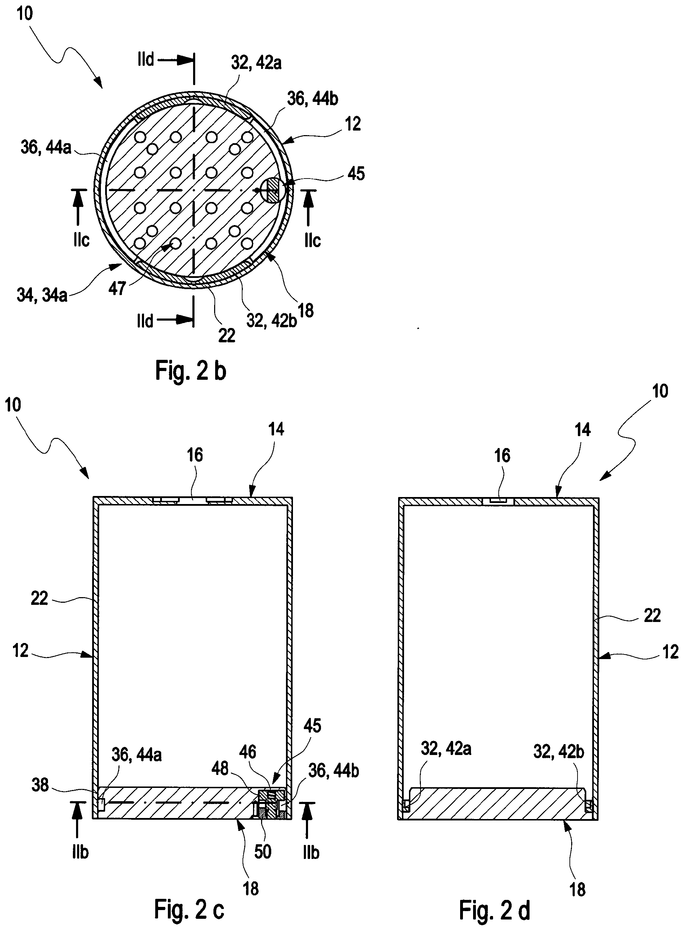

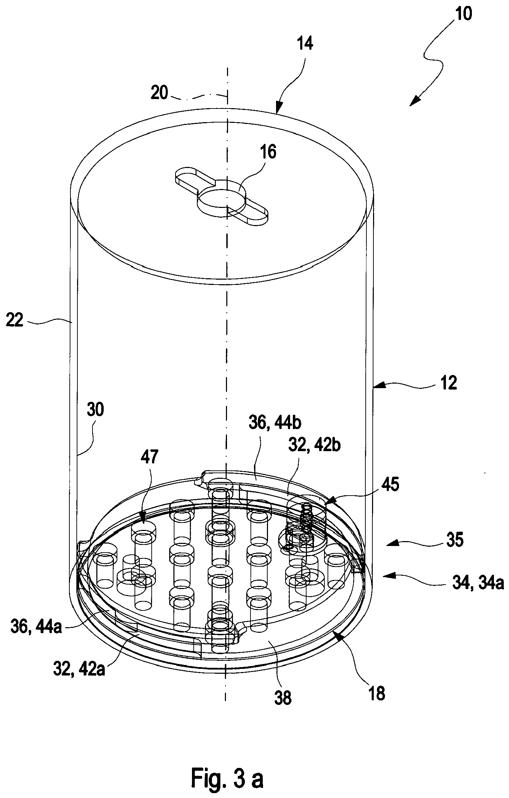

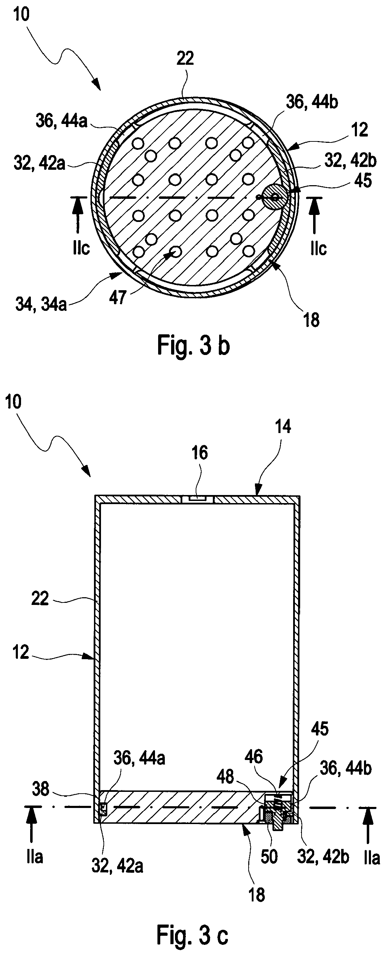

Der Werkzeugmaschinen-Kokon 10 mit einer, als Bajonettverschluss 34a, ausgeführten Verriegelungseinrichtung 34 ist in den Figuren 2a, 2b, 2c und 2d für den entriegelten Zustand gezeigt. Figuren 3a, 3b und 3c zeigen den Werkzeugmaschinen-Kokon 10 mit Bajonett-Verriegelungseinrichtung 34a im verriegelten Zustand.

Gleiche Gegenstände sind mit gleichen Bezugszeichen versehen und es wird diesbezüglich auf die Beschreibung zu Figur 1 verwiesen.

Figur 2a zeigt den Werkzeugmaschinen-Kokon 10 aus Figur 1 mit im Mantelelement 12 montiertem Deckelelement 14 und Bodenelement 18, wobei das Bodenelement 18 und das Mantelelement 12 entriegelt sind. Das Bodenelement 18 ist in Figur 2b im Schnitt gemäß IIb aus Figur 2c gezeigt. Das an der Innenwandlung 30 des Mantelelementes 12 angeordnete erste Verriegelungselement 32 weist zwei Vorsprünge 42 a und 42b auf, die gegenüberliegend angeordnet sind.

Bei der Montage wird das Mantelelement 12 über das Bodenelement 18 geschoben oder das Bodenelement 18 wird in das Mantelelement 12 hineingeschoben, wobei das Verriegelungselement 36 als Ausnehmung 44a und 44b ausgeführt ist. Die Vorsprünge 42a und 42 b greifen in die Ausnehmungen 44a und 44b des Bodenelementes 18 ein und bilden beim Drehen dann die feste Verbindung aus. Es können auch mehr als zwei Vorsprünge 42 und mehr als zwei Ausnehmungen 44 vorgesehen sein, um den Bajonettverschluss 34a zu realisieren.

Die Verbindung erfolgt somit über eine Steck-Dreh-Bewegung. Die beiden zu verbindenden Teile, Bodenelement 18 und Mantelelement 12, werden ineinander gesetzt. Hierbei sind die Vorsprünge 42a und 42 b annähernd senkrecht zur Rotationsachse 20, also der Steckbewegung, ausgeführt und laufen jedoch nicht rundum, sondern sind unterbrochen, wodurch das Ineinanderstecken ermöglicht ist. Die Vorsprünge 42a und 42b können leicht schräg in der Ebene senkrecht zur Rotationsachse 20 und somit der Steckrichtung ausgeführt sein, wodurch durch eine Drehbewegung das Bodenelement 18 und das Mantelelement 12 gegeneinandergepresst werden.

Wie in Figur 2c im Längsschnitt gemäß IIc aus Figur 2b gezeigt, ist ferner eine Verdrehsicherungseinrichtung 45 vorgesehen, die in den Figuren 2, 3 und 4 als Rasteinrichtung 45 ausgeführt ist. Die Rasteinrichtung 45 weist eine Druckfeder 46, einen Spannbolzen 48 und eine Verschlussplatte 50 auf. Beim relativen Verdrehen des Mantelelementes 12 und des Bodenelementes 18 löst bzw. fixiert die Rasteinrichtung 45 die lösbare Verbindung des Bajonettverschlusses 34a.

Als Verdrehsicherungseinrichtung 45 kann auch ein Kugeldruckstück eingesetzt werden. Jede andere Verdrehsicherungseinrichtung 45, die geeignet ist, bei einer Drehbewegung der Arbeitsspindel 72 der Werkzeugmaschine die Verbindung zwischen Bodenelement 18 und Mantelelement 12 und/oder Deckelelement 14 zu gewährleisten ist geeignet.

Alternativ zum Verfahren der ineinandergreifenden Schienen (Vorsprung 42a, 42b und Ausnehmung 44a, 44b) kann auch eine entsprechend anders geformte Einbuchtung am einen und eine Ausbuchtung am anderen Teil (Mantelelement 12, Deckelelement 14 und Bodenelement 18) verwendet werden.

Figur 2d zeigt das Mantelelement 12 und das Bodenelement 18 mit in Schnittdarstellung als Längsschnitt in der Ebene AA gemäß IId aus Figur 2b.

In Figur 2d sind ferner Aufnahmeeinrichtungen 47 zur Aufnahme und Fixierung des Werkstückes 40 gezeigt.

Figuren 3 a, 3b und 3c zeigen den Werkzeugmaschinen-Kokon 10 jeweils in einem verriegelten Zustand. Hierbei ist Figur 3a eine transparente schematische Darstellung in Perspektivansicht, Figur 3b eine Darstellung in Draufsicht mit einem Schnitt in der Ebene AA von Figur 3c und Figur 3c ein Längsschnitt der Darstellung aus Figur 3a.

Figur 4a zeigt den Werkzeugmaschinen-Kokon 10 in Perspektivansicht. Figur 4b zeigt eine Seitenansicht im Längsschnitt des Werkzeugmaschinen-Kokons 10 und Figur 4c zeigt den Werkzeugmaschinen-Kokon 10 aus Figur 4b in einer um 90° versetzten Seitenansicht. Der Werkzeugmaschinen-Kokon 10 ist in Figuren 4a, 4b und 4c mit einem Spannzeug 52 verbunden. Die Verbindungsschnittstelle 54 zwischen Spannzeug 52 und Werkezugmaschinen-Kokon 10 ist die Ausnehmung 16 am Deckelelement 14 des Werkzeugmaschinen-Kokons 10, in die ein nicht dargestelltes Verbindungselement 56 des Spannzeuges 52 eingegriffen hat. Durch Verdrehen des Verbindungselementes 56 in der Ausnehmung 16 ist das Spannzeug 52 mit dem Werkzeugmaschinen-Kokon 10 lösbar verbunden und an diesem fixiert.

Ein Beispiel für das Spannzeug 52 ist die Schnittstelle SK40. Mit 58 soll schematisch die Schnittstelle zwischen Arbeitsspindel 72 und Spannzeug 52.

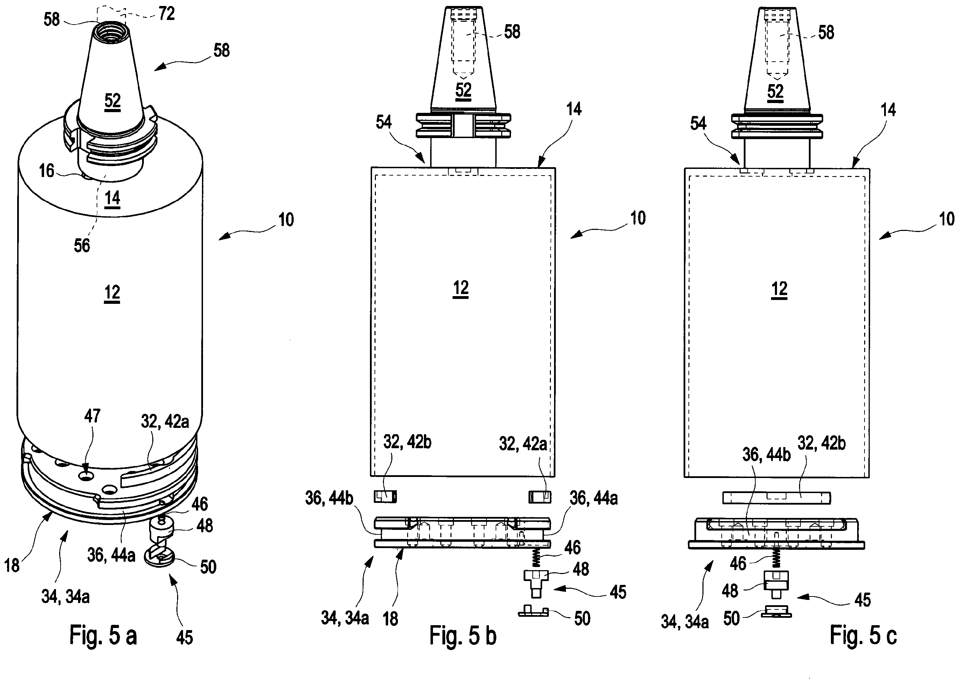

Figuren 5a, 5b und 5c zeigen den Werkzeugmaschinen-Kokon 10 jeweils in Perspektivansicht und Seitenansicht entsprechend den Darstellungen von Figuren 4a, 4b und 4c mit dem Spannzeug 58 im verriegelten Zustand. Gleiche Gegenstände sind mit den gleichen Bezugszeichen versehen.

Im verriegelten Zustand sind das Bodenelement 18 und das Mantelelement 12 um 90° zueinander verdreht, sodass die Vorsprünge 42a und 42b derart in die Ausnehmungen 44a und 44b eingegriffen haben, dass bei einer Bewegung parallel zu der Rotationsachse 20 die Position des Bodenelementes 18 und des Mantelelementes12 unverändert bleiben.

Die Verriegelung kann wieder gelöst werden, wenn Mantelelement 12 und Bodenelement 18 relativ zueinander und gegeneinander in einer Ebene senkrecht zur Rotationsachse 20 verdreht werden, bevorzugt um 90° relativ zueinander. Ausnehmung 44a, 44b und Vorsprung 42a, 42b sind aus dem verriegelten Zustand gelöst.

Figur 6 zeigt die komplette Anordnung einer Werkzeugmaschine 60 mit einer Werkzeugwechselvorrichtung 62, die auch als Werkzeugwechselsystem 62 bezeichnet wird, und einer Bearbeitungseinheit 64 für Werkstücke 40. In dem Werkzeugwechselsystem 62 sind Werkzeugpositionen 66 vorgesehen. Auf die jeweiligen Werkzeugpositionen 66 können sowohl Werkzeuge 68, als auch der Werkzeugmaschinen-Kokon 10 mit oder ohne in diesem angeordneten Werkstücken 40 positioniert werden. Hierbei sind die Abmessungen des Werkzeugmaschinen-Kokons 10 derart gewählt, dass sie den Abmessungen für das Werkzeug 68 entsprechen. Typische Abmessungen sind: der maximale Durchmesser für das Mantelelement 12 beträgt in etwa 100 bis 150 mm und die maximale Höhe für das Mantelelement 12 beträgt in etwa 150 mm. Es sind auch andere Dimensionen für den Werkzeugmaschinen-Kokons10 möglich, wobei die Dimensionen des Werkzeugmaschinen-Kokons 10 den Dimensionen des verwendeten Werkzeuges entsprechen.

Zwischen dem Werkzeugwechselsystem 62 und der Bearbeitungseinheit 64 ist ein Transfersystem 70 angeordnet, welches das jeweilige Werkzeug 68 von der Werkzeugposition 66 in die Bearbeitungseinheit 64 transferiert. Das Transfersystem 70 kann auch realisiert sein, indem die Spindel der Bearbeitungseinheit verfahrbar ist und direkt an die Werkzeugpositionen 66 fährt und das Werkezeug und/oder den Werkzeugmaschinen-Kokon 10 greift. Hierbei greift das Transfersystem 70 das Spannzeug 52 auf dem das Werkzeug 68 angeordnet ist und positioniert es in eine Werkzeugaufnahme 72, bevorzugt in eine Werkzeugspindel 72a der Bearbeitungseinheit 64. Entsprechend greift das Transfersystem 70 das Spannzeug 52, welches in der Ausnehmung 16 des Werkzeugmaschinen-Kokon 10 angeordnet ist, ein, wobei der Werkzeugmaschinen-Kokon 10 an einer Position 66b beispielsweise angeordnet ist, transferiert diesen in die Bearbeitungseinheit 64 und positioniert den Werkzeugmaschinen-Kokon 10 mit dem zu bearbeitenden Werkstück 40 an die Bearbeitungsposition 74. Die Bearbeitungsposition 74 weist hierbei ein bekanntes Nullpunktspannsystem 76 auf, wie es in Werkzeugmaschinen 60 standartmäßig verwendet wird. Hierbei ist die Bearbeitungsposition 74 in etwa unterhalb der Werkzeugposition in dem Nullpunktspannsystem 76 angeordnet. Alternativ kann der Werkezugmaschinen-Kokon 10 mit der Spindel 72 transportiert werden und so in die Bearbeitungsposition 74 verbracht werden.

Der Werkzeugmaschinen-Kokon 10 wird geöffnet, indem Bodenelement 18 und Mantelelement 12 relativ zueinander bewegt werden, die Verriegelungseinrichtung 34 wird geöffnet und das Mantelelement 12 wird aus der Bearbeitungsposition 74 entfernt. Hierbei bleibt das Spannzeug 52 am Deckelelement 14 angeordnet.

Dies sind Werkzeugmaschinen, die als Werkzeuge 68 Fräser, Bohrer, Wendeschneidplattenwerkzeuge einsetzten. Hierbei ist das Werkzeug 68 in einer Hauptspindel 72 gehaltert. Hierbei kann der Werkzeugmaschinen-Kokon 10 sowohl bei metallbearbeitenden Werkzeugmaschinen, als auch bei holzbearbeitenden Maschinen eingesetzt werden.

Figur 7 beschreibt ein Verfahren 100 zum Betreiben einer Werkzeugmaschine 60, bei der ein Werkzeugmaschinen-Kokon 10 eingesetzt wird.

Im Verfahrensschritt 102 werden die Werkzeugpositionen 66 des Werkzeugwechseleinheit 62 sowohl mit Werkzeugen 68 als auch mit Werkzeugmaschinen-Kokons 10 bestückt. In den Werkzeugmaschinen-Kokons 10 sind jeweils die zu bearbeitenden Werkstücke 40 angeordnet.

Im Verfahrensschritt 104 wird ein Bearbeitungsprogramm geladen, welches die nacheinander zu durchlaufenden Prozessschritte beinhaltet. In dem Bearbeitungsprogramm sind sowohl Programmschritte zur Auswahl der zu einem Bearbeitungsschritt geeigneten und verwendeten Werkzeuge 68 enthalten, als auch Programmschritte zum Wechseln des zu bearbeitenden Werkstückes 40. Somit weist das Bearbeitungsprogramm die Auswahl und Positionierung eines Werkstück 40a auf, sowie die Auswahl und Positionierung der zur Bearbeitung des Werkstückes 40a geeigneten Werkzeuge 68a, 68b, etc. Ferner weist das Bearbeitungsprogramm Schritte auf zum Entfernen des Werkstückes 40a aus der Bearbeitungsposition 74 und zum Transfer in eine zuvor programmierte Werkzeugposition 66 sowie zur Auswahl und Positionierung eines weiteren Werkstückes 40b aus der Werkzeugposition 66b in die Bearbeitungsposition in der Bearbeitungseinheit 64.

Im Verfahrensschritt 106 wird das Bearbeitungsprogramm gestartet. Im Bearbeitungsprozess werden automatisch die im Werkzeugspeicher des Werkzeugwechselsystems 62 positionierten Werkstücke 40 bearbeitet, wobei diese aus der Werkzeugwechseleinheit 62 in die Bearbeitungseinheit 64 verbracht werden. Hierbei werden sowohl das Werkzeug 68 als auch der Werkzeugmaschinen-Kokon 10 an eine Werkzeugmaschinenspindel oder Arbeitsspindel 72 übergeben oder sind mit dieser verbunden. Wird eine Transfereinheit 70 verwendet, wird zum Transport des Werkzeugmaschinen-Kokons 10 dieselbe Schnittstelleneinheit wie für das Werkzeug 68 verwendet.

Nach dem jeweiligen Bearbeitungsschritt werden die Werkstücke 40, 40a, 40b, etc. wieder mittels des Werkzeugmaschinen-Kokons 10 in die jeweilige Werkzeugposition 66, 66a, 66b, etc. des Werkzeugspeichers verbracht. Hierbei wird das Werkstück 40, 40a, 40b, etc. jeweils durch eine relative Drehbewegung zwischen Bodenelement 18 und von dem Mantelelement 12 des Werkzeugmaschinen-Kokons 10 und Herausfahren des Mantelelementes 12 aus dem Bearbeitungsbereichs der Bearbeitungseinheit 64 zur Bearbeitung durch das jeweils eingespannte Werkzeug 68 bereitgestellt.

### Bezuaszeichenliste

- 10: Werkzeugmaschinen-Kokon
- 12: Mantelelement
- 14: Deckelelement
- 16: Ausnehmung
- 18: Bodenelement
- 20: Rotationsachse
- 22: Mantelkörper
- 24: Wandstärke
- 26: Außendurchmesser
- 28: Innendurchmesser
- 30: Innenwandung
- 32: erstes Verriegelungselement
- 34: Verriegelungseinrichtung
- 34a: Bajonettverschluss
- 35: Abschnitt
- 36: zweites Verriegelungselement
- 38: Außenwandung
- 40: Werkstück
- 42a, 42b: Vorsprung
- 44a, 44b: Ausnehmung
- 45: Verdrehsicherungseinrichtung, Rasteinrichtung
- 46: Feder
- 47: Aufnahmeeinrichtung
- 48: Spannbolzen
- 50: Verschlussplatte
- 52: Aufnahmeeinrichtung, Spannzeug
- 54: Verbindungsschnittstelle
- 56: Verriegelungselement des Spannzeuges
- 58: Ausnehmung zur Aufnahme der Spindel, Hauptspindel, Werkzeugspindel
- 60: Werkzeugmaschine
- 62: Werkzeugwechselsystem, Werkzeugspeicher, Werkzeugwechselvorrichtung
- 64: Bearbeitungseinheit
- 66: Werkzeugposition im Werkezugspeicher und/oder Werkzeugmagazin, Positionen für den Werkzeugmaschinen-Kokon 10
- 68: Werkzeug
- 70: Transfereinheit, Transfersystem
- 72: Hauptspindel, Arbeitsspindel, Werkzeugspindel
- 100: Verfahren zum Betreiben einer Werkzeugmaschine
- 102: Bereitstellen von Werkzeugen und Werkstücken in der Werkzeugwechseleinheit 62
- 104: Laden eines Bearbeitungsprogramms
- 106: Starten des Bearbeitungsprogramms

## Patentansprüche

1. Werkzeugmaschinen-Kokon zur Aufnahme eines Werkstücks mit einem Bodenelement auf dem das Werkstück anordenbar ist, wobei der Werkzeugmaschinen-Kokon auf einer Werkzeugposition eines Werkzeugwechselsystems positionierbar ist.

2. Werkzeugmaschinen-Kokon nach Anspruch 1, **dadurch gekennzeichnet, dass** ein Deckelelement vorgesehen ist, wobei das Deckelelement mit dem Bodenelement verbindbar oder verbunden ist.

3. Werkzeugmaschinen-Kokon nach Anspruch 1 oder 2, **dadurch gekennzeichnet, dass** ein Mantelelement vorgesehen ist, welches zwischen dem Deckelelement und dem Bodenelement angeordnet ist.

4. Werkzeugmaschinen-Kokon nach Anspruch 1, 2 oder 3, **dadurch gekennzeichnet, dass** das Deckelement und/oder das Mantelelement mittels einer Verriegelungseinrichtung lösbar mit dem Bodenelement verbindbar ist.

5. Werkzeugmaschinen-Kokon nach Anspruch 1, **dadurch gekennzeichnet, dass** das Deckelelement, das Mantelelement und/oder das Bodenelement rotationssymmetrisch ausgeführt sind.

6. Werkzeugmaschinen-Kokon nach Anspruch 1 oder Anspruch 2, **dadurch gekennzeichnet, dass** das Deckelelement eine Ausnehmung zur Aufnahme eines Spannzeuges oder mindestens ein Element eines Spannzeuges aufweist.

7. Werkzeugmaschinen-Kokon nach einem der vorhergehenden Ansprüche, **dadurch gekennzeichnet, dass** an dem Deckelelement oder dem Mantelelement mindestens ein erstes Verriegelungselement der Verriegelungseinrichtung angeordnet ist und am Bodenelement mindestens ein zweites Verriegelungselement der Verriegelungseinrichtung angeordnet ist, wobei das erste Verriegelungselement und das zweite Verriegelungselement ineinander eingreifen, um das Deckelement oder das Mantelelement mit dem Bodenelement zu verbinden.

8. Werkzeugmaschinen-Kokon nach einem der vorhergehenden Ansprüche, **dadurch gekennzeichnet, dass** das erste Verriegelungselement und das zweite Verriegelungselement jeweils Mittel aufweisen, wodurch das Verbinden und das Lösen mittels einer Relativbewegung, insbesondere einer Drehbewegung zwischen dem ersten Verriegelungselement und dem zweiten Verriegelungselement herstellbar und lösbar ist.

9. Werkzeugmaschinen-Kokon nach einem der vorhergehenden Ansprüche, **dadurch gekennzeichnet, dass** die Verriegelungseinrichtung ein Bajonettverschlusssystem ist.

10. Werkzeugmaschinen-Kokon nach einem der vorhergehenden Ansprüche, **dadurch gekennzeichnet, dass** das Bodenelement eine Verdrehsicherung, insbesondere eine Rasteinrichtung aufweist.

11. Werkzeugmaschinen-Kokon nach einem der vorhergehenden Ansprüche, **dadurch gekennzeichnet, dass** das Mantelelement und/oder das Deckelelement und/oder das Bodenelement aus einem Metall oder einer Metalllegierung gefertigt sind.

12. Werkzeugmaschinen-Kokon nach einem der vorhergehenden Ansprüche, **dadurch gekennzeichnet, dass** der Werkzeugmaschinen-Kokon zur Bevorratung von Werkstücken an Werkzeugpositionen im Werkzeugspeicher und/oder Werkzeugmagazin der Werkzeugmaschine einsetzbar ist.

13. Werkzeugwechselvorrichtung für eine Werkzeugmaschine mit einem Werkzeugspeicher oder Werkzeugmagazin, wobei der Werkzeugspeicher oder das Werkzeugmagazin Werkzeugpositionen aufweist, **dadurch gekennzeichnet, dass** an die Werkzeugpositionen Werkzeuge und Werkstücke positionierbar sind.

14. Werkzeugwechselvorrichtung nach Anspruch 13, **dadurch gekennzeichnet, dass** die Werkstücke mittels des Werkzeugmaschinen-Kokons nach einem der Ansprüche 1 bis 12 an den Werkzeugpositionen positionierbar sind.

15. Werkzeugmaschine mit einer Werkzeugwechselvorrichtung und mindestens einer Bearbeitungseinheit, **dadurch gekennzeichnet, dass** die Werkzeugwechselvorrichtung einen Werkzeugspeicher mit Werkzeugpositionen aufweist, wobei in die Werkzeugpositionen Werkzeuge und Werkzeugmaschinen-Kokons positionierbar sind.

16. Werkzeugmaschine nach Anspruch 15, **dadurch gekennzeichnet, dass** die Werkzeuge und die Werkzeugmaschinen-Kokons von den Werkzeugpositionen mittels derselben Einrichtung in die Bearbeitungseinheit verbringbar sind.

17. Verfahren zum automatischen Betreiben einer Werkzeugmaschine mit einem Werkzeugwechselsystem und einer Bearbeitungseinheit, wobei in einem Werkzeugspeicher des Werkzeugwechselsystems sowohl Werkzeuge zum Einsetzen in die Bearbeitungseinheit als auch zu bearbeitenden Werkstücke angeordnet werden, wobei die Werkstücke in einem Werkzeugmaschinen-Kokon angeordnet sind.

18. Verfahren nach Anspruch 17, **dadurch gekennzeichnet, dass** die Werkzeuge und die Werkzeugmaschinen-Kokons mittels einer Spindel der Bearbeitungseinheit, insbesondere einer Werkzeugspindel von dem Werkzeugspeicher in die Bearbeitungseinheit transferiert werden.
